# EUROPEAN PATENT APPLICATION

(11) **EP 1 203 530 A1**
(43) Date of publication of application: **08.05.2002**
(21) Application number: 01204228.9
(22) Date of filing: 06.11.2001
(51) Int. Cl.: A01M 1/14, A01M 1/04

(54) **Apparatus comprising a trap part**

(30) Priority: 06.11.2000 NL 1016548; 14.12.2000 NL 1016881
(71) Applicant: Van Eenbergen, Bruce, 1215 NL Hilversum (NL); Van Eenbergen, Marie-José, 1215 NL Hilversum (NL); Van Eenbergen, André, 1215 NL Hilversum (NL)
(72) Inventor: Van Eenbergen, Bruce, 1215 NL Hilversum (NL); Van Eenbergen, Marie-José, 1215 NL Hilversum (NL); Van Eenbergen, André, 1215 NL Hilversum (NL)
(74) Representative: Land, Addick Adrianus Gosling

(57) **Abstract**

The present invention provides an apparatus, comprising:
- a trap part (1) for trapping at least one insect which is provided with active substances on the surface thereof,
- fixing means for placing the trap part close to a lamp (10).

In a preferred embodiment the trap part comprises aromatic substances and/or fragrance.

A further preferred embodiment of the present invention is an apparatus wherein the trap part comprises adhesive substances and/or baits.

## Description

There are many forms of insect traps in use. Not all forms of trapping insects are however equally suitable in a household since people have different ideas on what they find acceptable. Not everyone likes lethal poisons or crackling electrocution devices. Nor are hanging strips with adhesive material found attractive by many people, and certainly not with a variety of insect remains sticking on them. Many insect exterminators are also expensive and conspicuous. It is an object of the invention to provide a solution for such problems.

The present invention provides an apparatus, comprising:
- a trap part for trapping at least one insect which is provided with active substances on the surface thereof;
- fixing means for placing the trap part close to a lamp.

This provides the advantages that the insects are also attracted by the light of the lamp.

In a preferred embodiment the trap part comprises adhesive substances and/or baits with which insects can be lured or, as additional advantageous effect, held fast. In the case baits are applied, insects are also attracted when the light is off.

In a further preferred embodiment the trap part is provided with aromatic substances and/or fragrance instead of adhesive substances and/or baits. An advantage hereof is that during periods without insects the interior of the house can be provided with a pleasant fragrance.

Simple placing of the invention becomes possible when the lamp is part of a lamp with lampshade. There are various reasons herefor. Many such lamps are found in households. This enables use in many households without having to produce too many variations in models of the invention. Such lamps are usually embodied with lampshades whereby the trap part can be used invisibly, which is certainly pleasant in a home environment since many people find trapped insects a disagreeable sight.

For arranging of the trap part in the lampshade a preferred embodiment of the invention provides fixing means comprising:
- a ring or open ring for mounting on a lamp fitting,
- at least one part extending substantially vertically with one or more fixing parts for fixing the trap part. An advantage of this embodiment is that it is simple to fix an insect-luring part to a lamp fitting herewith. In many cases a lamp fitting is provided on the outside with a screw thread onto which a fitting ring can be screwed. Using such a fitting ring, the ring or open ring can be clamped fixedly on the fitting. In the case the fixing means comprise a ring, the fitting ring and the lamp have to be wholly removed for placing of the ring and, in the case the fixing means comprise an open ring, it is sufficient to loosen the fitting ring slightly, whereafter the open ring can be placed along one side of the fitting, whereafter the fitting ring can be tightened.

It is further possible in this embodiment that for the purpose of fixing to the fitting the ring be provided with a screw thread for fastening to a screw thread of a lamp fitting. An advantage hereof is that this embodiment can be applied very simply on a standard fitting. A further aspect of this embodiment is that the vertical part is of a length such that the trap part can be fixed on the other side of the insect-luring part. These embodiments make it possible to arrange the trap part in simple manner inside a lampshade, this by making use of a screw thread of a lamp fitting which is often already present inside a lampshade.

In a further embodiment the trap part is annular and/or cylindrical for placing in a position above or below the lamp. This relates to the preference that the substantially vertical part of the fixing means is of a length such that the trap part can be fixed on the other side of the insect-luring part as seen from the ring of the fixing means. In the case a fitting is provided with a lamp at the top, as in a free-standing lamp, the trap part is arranged above the lamp. If in the case of a hanging lamp the lamp is attached to the underside of the fitting, the trap part is arranged on the underside of the lamp.

Since in practice lamps are usually circular as seen from above, it is practical to give the trap part an annular form so that it can be arranged substantially above the lamp and excludes little or no light and/or casts no shadows. It is advantageous to embody this ring shape as part of an upside-down cone. In this way shadow effects by the trap device are virtually precluded because the sides of this cone run parallel to the light emission of the lamp.

In a further preferred embodiment the trap part is adapted to extend along the lamp in a substantially vertical direction. The trap part is preferably rod-like herein. A variant hereof can be that the trap part is bent. Such an embodiment is easily replaced by preferably placing the substantially vertical part of the fixing means close to the underside of the lamp. This can be advantageous for instance if the lampshade has a relatively small opening close to the top whereby placing of a ring on the top side of the lamp is less to be recommended.

In a further embodiment the trap part is provided with a lip without adhesive substances. This has the advantage that the trap part can be taken hold of without the adhesive substance causing inconvenience.

The inconvenience of the adhesive substance during placing or removal of the trap part in or out of the fixing means can be obviated. An embodiment is provided for this purpose wherein the trap part is provided with one or more interruptions in the layer of adhesive substance on the surface. An advantage hereof is that removal of the trap part from the slot is much easier without the hindrance of an adhesive substance. It is advantageous if the interruptions are visibly marked so that the user can see where the trap part can ideally be placed in the slot of the fixing means.

A further preferred embodiment provides that the trap part consists of heat-resistant material and/or of non-flammable material. Since placing is provided in the vicinity of a lamp, such as a light bulb or other light source, it is advantageous if in such a hot environment the trap part is for instance form-retaining and/or chemically inert. It is of further advantage if the trap part can for instance not catch fire, even if it accidentally makes contact with a hot light bulb.

In another method of fixing the trap part, the fixing means consist of:
- one or more pins extending downward from the top of the lampshade,
- one or more mounting parts for fixing the annular member to the pins.

The mounting means can also be fixed to rods of a lampshade extending upward from the bottom and comprise the following parts:
- one or more mounting parts for fixing the trap part,
- one or more parts for fixing the mounting parts on the rods of a lampshade. If a fitting is for instance not available with screw thread, these alternative fixing means can nevertheless enable use of the invention.

For stable placing of the trap part it is advantageous if a fixing part is annular in order to receive an annular trap part of substantially the same cross-section and that it comprises one or more slots for placing of the trap part.

Further advantages, features and details of the present invention will become apparent on reading of the following description of a preferred embodiment with reference to the accompanying figures, in which:
- fig. 1 shows a partly cut-away view in perspective of a lamp in which a preferred embodiment of the present invention is arranged,
- fig. 2 shows a partly cut-away view in perspective of a lamp in which a second embodiment of the invention is arranged,
- fig. 3 is a partly cut-away view of a lamp in which a third embodiment of the invention is arranged,
- fig. 4 is a perspective view of a preferred embodiment according to the present invention,
- fig. 5 is a perspective view of a preferred embodiment according to the present invention,
- fig. 6 is a perspective view of an embodiment according to the present invention,
- fig. 7 is a perspective view of an embodiment according to the present invention.

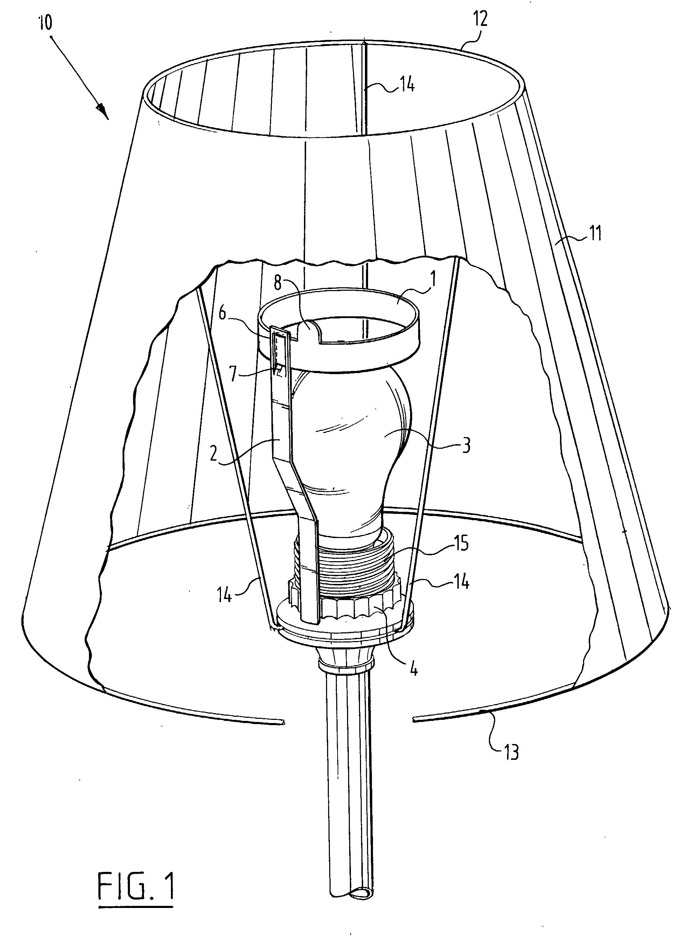

A first preferred embodiment (fig. 1) consists of a trap ring 1 being arranged on the inside of a lampshade 11 of a lamp 10. This trap ring is annular, made from for instance cardboard or plastic made non-flammable and having an adhesive substance on the surface. This adhesive surface is intended to cause insects to stick thereto. In order to lure insects to the trap ring, baits are also arranged on the trap part in this embodiment in addition to adhesive substances.

Another lure which works very well in the case of insects is light. Arranging of the trap ring close to a lamp also achieves that insects come close to the trap ring. A choice is made in this embodiment for a floor or table lamp, since such lamps are found in many households. The presence of a lampshade 11 in a lamp makes it possible to place the trap ring so that it is invisible from the surrounding area.

Provided for this purpose is a rod 2 which in this embodiment is fixed to the fitting of the lamp by means of a ring. This ring is placed fixedly round the screw thread of fitting 15. The outer end 6 of rod 2 is provided with a slot 7 in which the trap part can be placed.

It is recommended that for this purpose the trap ring not be provided with an adhesive substance over the whole surface, but that this adhesive substance be interrupted at one or more positions so that the trap part does not remain stuck in the slot. A lip 8 is also provided on the trap ring by which the latter can be held during placing in and removal from slot 7.

Trap part 1 is placed substantially above the lamp. The reason for this is that a purpose of a lamp is to illuminate the space around it, and the ring can cause shadows if it were placed round the lamp.

For instance, if the annular insect trap were to be placed between the lamp and the lampshade, this would result in a shadow of this ring on the lampshade. This is not an aesthetically attractive effect and would be perceived as undesirable in a household. An adverse effect is prevented by enabling a free emission of lamplight on the lampshade by placing the trap part above the lamp.

An advantageous aspect of this embodiment is that after placing of the rod in the lamp fitting the trap ring can be replaced in very simple manner. A new trap part can simply be placed in the slot and, once it has lost its effect, it can be simply removed and replaced by a new one.

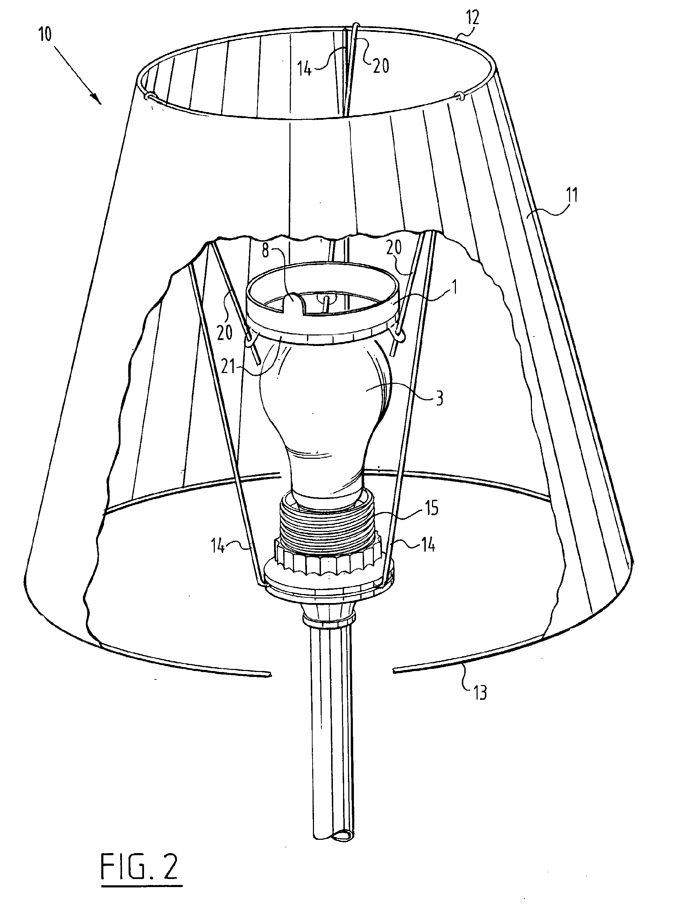

In another embodiment (fig. 2) the same trap ring 1 with lip 8 is provided. However, the rod is here replaced by pins 20 which hang substantially downward from the top side of lampshade 12 on the inside thereof and which are fixed to an annular holder 21 on which the trap part can be placed. It is advantageous for this purpose that the underside of the trap part is non-adhesive. An advantage of this embodiment is that the trap ring is even easier to place than in the first embodiment. A favourable aspect is that the placing ring 21 can be provided with an all-round groove (not shown) in which trap ring 1 can be placed. In this case the stability of the placed trap ring is ensured. An advantage of this embodiment is that the height of the trap part can be adjusted by mounting the placing ring 21 at the desired height on pins 20.

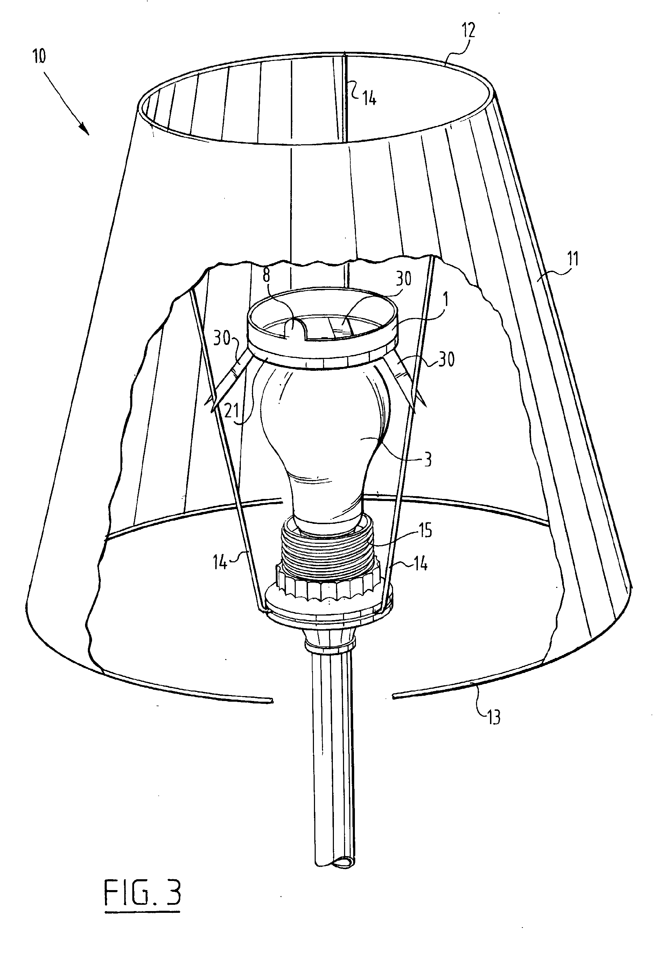

A further preferred embodiment of the invention (fig. 3) is that in this embodiment the placing ring 21 is fixed by means of mounting parts 30 to rods 14 of the lampshade which extend substantially from bottom to top. These mounting parts 30 can be embodied running obliquely downward, horizontally (not shown) or obliquely upward (not shown) from ring 21. An advantage of the embodiment is that the placing of the trap part is height-adjustable by bending mounting parts 30.

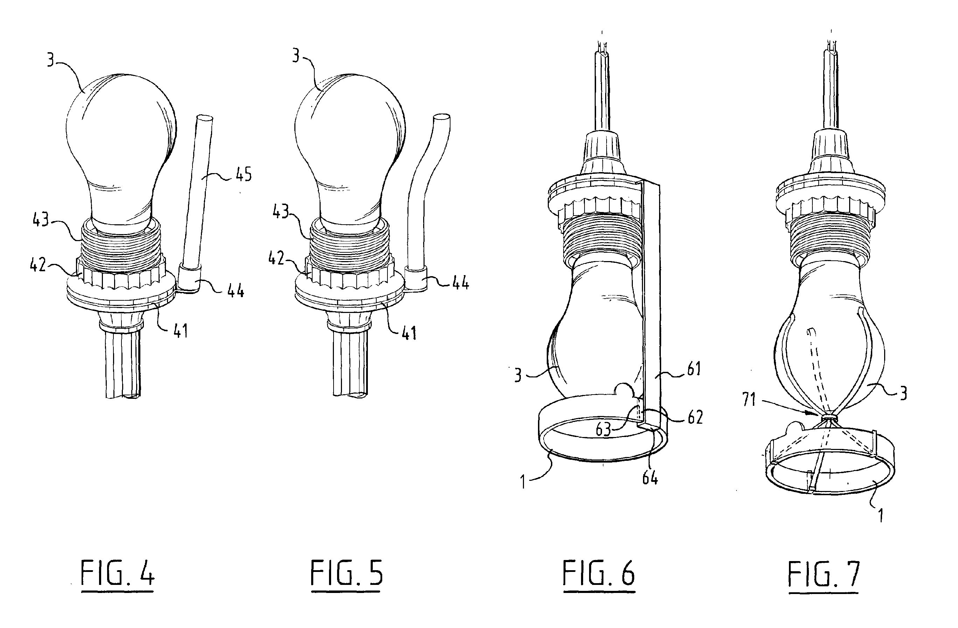

In a further preferred embodiment (fig. 4) the ring 41 is clamped by a fitting ring 42, wherein fitting ring 42 is screwed fixedly by means of screw thread 43. Attached to ring 41 is a vertical part 44. Placed herein is trap part 45 which, as a result of this arrangement, is situated close to lamp 3. In the embodiment of figure 5 the trap part is shown bent. In both these embodiments the trap part is shown as a round rod. An embodiment as flat strip or the like is however also quite possible. Easy replacement of the trap part after use is likewise possible in these embodiments.

If the fitting is arranged above the light bulb, the placing of a trap part 1 is also possible using the embodiment of figure 6. In this case the vertical part 2 of the fixing means is provided with a slot 63 which is formed by the vertical part 61 of the fixing means, a bent horizontal part 64 and a bent vertical part 63 of the fixing means. This will enable simple placing of the annular trap part in similar manner as in embodiments above. A free emission of light from the lamp along and through the trap ring is also possible in this embodiment.

The same is the case for the application of the trap ring in the embodiment of figure 7. It is also the case here that the trap ring can be removed and/or replaced very easily after use and that the light emission is practically not obstructed. This embodiment provides fixing means 71 which can be placed on the bulb 3. The very practical trap ring 1 can also be replaced and/or removed very easily after use in this embodiment. Using similar modifications of the above described embodiments, these clamp fixing means 71 can also be applied for standard and hanging lamp-fitting combinations.

## Claims

1. Apparatus, comprising:
- a trap part for trapping at least one insect which is provided with active substances on the surface thereof;
- fixing means for placing the trap part close to a lamp.

2. Apparatus as claimed in claim 1, wherein the trap part comprises adhesive substances and/or baits.

3. Apparatus as claimed in claim 1 or 2, wherein the trap part comprises aromatic substances and/or fragrance.

4. Apparatus as claimed in claims 1-3, wherein the fixing means comprise:
- a ring or open ring for mounting on a lamp fitting,
- at least one part extending substantially vertically and comprising one or more fixing parts for fixing the trap part.

5. Apparatus as claimed in claim 4, wherein the ring for mounting on the fitting is provided with a screw thread for fastening to a screw thread of a lamp fitting.

6. Apparatus as claimed in one or more of the foregoing claims, wherein the trap part is annular and/or cylindrical for placing in a position above or below the lamp.

7. Apparatus as claimed in one or more of the foregoing claims, wherein the vertical part is of a length such that the trap part can be fixed on the other side of the insect-luring part.

8. Apparatus as claimed in one or more of the foregoing claims 1-5, wherein the trap part is adapted to extend along the lamp in substantially vertical direction.

9. Apparatus as claimed in claim 8, wherein the trap part is substantially rod-like.

10. Apparatus as claimed in claim 8 or 9, wherein the trap part is bent.

11. Apparatus as claimed in one or more of the foregoing claims, wherein the fixing means comprise clamping means for clamping thereof on the lamp.

12. Apparatus as claimed in one or more of the foregoing claims, wherein the fixing means consist of:
- one or more pins extending downward from the top of the lampshade,
- mounting parts for fixing the annular member to the pins.

13. Apparatus as claimed in one or more of the foregoing claims, wherein the fixing means are mounted on rods of a lampshade extending substantially upward from the bottom, and comprise the following parts:
- mounting parts for fixing the trap part,
- one or more parts for fixing the mounting parts to the rods of the lampshade.

14. Apparatus as claimed in one or more of the foregoing claims, wherein the fixing parts are annular for receiving an annular trap part of substantially the same cross-section.

15. Apparatus as claimed in one or more of the foregoing claims, wherein the trap part is provided with a lip without adhesive substances.

16. Apparatus as claimed in one or more of the foregoing claims, wherein the trap part is provided with one or more interruptions in the layer of adhesive substance on the surface.

17. Method of manufacturing a trap device as claimed in one or more of the claims 1-16.
